# EUROPÄISCHE PATENTSCHRIFT

(11) **EP 1 480 808 B1**
(45) Veröffentlichungstag und Bekanntmachung des Hinweises auf die Patenterteilung: **22.02.2006**
(21) Anmeldenummer: 03711898.1
(22) Anmeldetag: 25.02.2003
(51) Int. Cl.: B29C 45/67

(54) **SCHLIESSEINRICHTUNG AN EINER KUNSTSTOFF-SPRITZGIESSMASCHINE**
CLOSING DEVICE IN A PLASTIC INJECTION MOLDING MACHINE
DISPOSITIF DE FERMETURE MONTE SUR UNE MACHINE DE MOULAGE A INJECTION DE MATIERE PLASTIQUE

(30) Priorität: 07.03.2002 DE 10209921
(43) Veröffentlichungstag der Anmeldung: 01.12.2004
(73) Patentinhaber: Hehl, Karl, 72290 Lossburg (DE)
(72) Erfinder: Hehl, Karl, 72290 Lossburg (DE)
(74) Vertreter: Reinhardt, Harry
(86) Internationale Anmeldenummer: PCT/EP2003/001875
(87) Internationale Veröffentlichungsnummer: WO 2003/074253

(56) Entgegenhaltungen:
- DE-C- 3 644 181
- DE-C- 3 844 432
- US-A- 3 786 725
- US-A- 4 380 427
- DATABASE WPI Week 197810 Derwent Publications Ltd., London, GB; AN 1978-18433a XP002244262 -& JP 53 007762 A (AOKI K)

## Beschreibung

Die Erfindung betrifft eine Schließeinrichtung an der Formschließeinheit einer Kunststoffspritzgießmaschine zur Verarbeitung von Kunststoffen und anderen plastifizierbaren Massen nach dem Oberbegriff des Anspruches 1.

Eine derartige Schließeinrichtung ist aus der DE 36 44 181 C1 bekannt. In einem symmetrisch zu einer Symmetrieachse der Formschließeinrichtung angeordneten Druckzylinder ist ein Fahrzylinder im Kolben des Druckzylinders angeordnet. Der Druckzylinder ist mit einer als Abstützung für die Schließeinrichtung aufgebauten Montageplatte und einem Zylinderdeckel zur Bildung des Schließzylinders verspannt. Der Druckkolben des Druckzylinders ist gemeinsam mit dem beweglichen Formträger beweglich. Die Kolbenstange des Fahrzylinders ist stationär angeordnet. Diametral zum Druckzylinder sind zwei Ausgleichszylinder angeordnet, die mit dem Niederdruckraum des Druckzylinders in offener Verbindung stehen. Bei der Schließbewegung wird Hydraulikmedium aus den Ausgleichszylindern und dem Niederdruckraum in den Hochdruckraum überführt, um die Zuhaltekraft aufzubringen. Das Volumen der Ausgleichszylinder ist bei einer derartigen Ausführungsform allerdings begrenzt und um eine symmetrische Krafteinleitung zu gewährleisten, ist ein entsprechender Aufwand an Präzision erforderlich.

Aus der DE 38 44 432 C1 ist zur Aufbringung größerer Kräfte eine Schließeinrichtung mit wenigstens zwei symmetrisch zur Mittelachse angeordneten Druckzylindern bekannt. Der Fahrzylinder ist weiterhin mittig angeordnet und liegt im Ausgleichszylinder. In der Praxis hat sich jedoch gerade bei empfindlichen Spritzteilen herausgestellt, dass trotz der symmetrischen Anordnung der Druckzylinder es unter Umständen, vor allem nach entsprechender Lebensdauer der Maschine, zu Ungleichmäßigkeiten im Aufbau des Zuhaltedrucks kommen kann, die sich auf die Präzision der Spritzteile auswirken.

Bei einer aus der EP 0 281 329 A2 bekannten Schließeinrichtung ist ein Fahrzylinder im Druckkolben eines mittigen Druckzylinders angeordnet. Vom Druckkolben verdrängtes Volumen wird in einen Ausgleichszylinder überführt, wobei Druckkolben und Kolben des Ausgleichszylinders gemeinsam am beweglichen Formträger geführt sind. Der Ausgleichszylinder befindet sich allerdings unter dem Druckzylinder und ist insofern asymmetrisch angeordnet. Obwohl es sich beim Ausgleichszylinder um einen passiven Zylinder handelt, führt die asymmetrische Anordnung zu einer ungleichmäßigen Kraftaufbringung mit den oben angeführten Nachteilen.

Ein mehrstückiger Schließzylinder für eine Spritzgießmaschine wurde bereits in der DE 41 17 852 C2 mit dem Ziel vorgeschlagen, das Bauvolumen und das umzuwälzende Druckmittelvolumen zu reduzieren. Über zwei ineinander geschachtelte Kolben findet ein serielles Schließen mit einem gesonderten Hub zum Aufbringen der Schleißkraft statt. Ein Ausgleichszylinder ist nicht vorgesehen. Die beschriebene Umsetzung genügt jedoch nicht den an die Präzision zu stellenden Anforderungen bei der Herstellung von Spritzteilen und es ergeben sich hohe Druckaufbauzeiten.

Aus der EP 0 281 330 A2 ist es bekannt, Fahrzylinder und Druckzylinder ineinander zu schachteln, jedoch keinen Ausgleichszylinder vorzusehen, sondern verdrängtes Hydraulikmedium über den Tank der Maschine zu führen. Dies führt zwar zu einem regelmäßigen hohen Austausch an Hydraulikmedium, erhöht aber die Druckaufbauzeiten.

Aus der älteren, nachveröffenttichten WO-A-02/ 32638 ist es bekannt, die Zylinder der Schließeinrichtung ineinander zu schachteln. Alle Zylinder sind konzentrisch zu einer Mittelachse angeordnet, so dass eine Krafteinleitung konzentrisch zu dieser Mittelachse erfolgt. Ein am vom stationären Formträger abgewandten Ende des Schließzylinders angeordnetes Abstützelement ist mit dem Schließzylinder und rückseitig mit Kraftübertragungselementen in Form von Holmen verbunden, die ihrerseits mit dem stationären Formträger verbunden sind. Dies führt zu entsprechenden Dehnungen der Holme beim Aufbau der Schließkraft und damit zu einer Erhöhung der Druckaufbauzeiten.

Ausgehend von diesem Stand der Technik liegt der vorliegenden Erfindung die Aufgabe zugrunde, eine Schließeinrichtung für eine Spritzgießmaschine zu schaffen, die bei platzsparendem Aufbau den an die Präzision zu stellenden Anforderungen bei der Herstellung von Spritzteilen genügt.

Diese Aufgabe wird durch eine Schließeinrichtung mit den Merkmalen des Anspruches 1 gelöst.

Das Abstützelement und der daran angeordnete Zylinder sind einstückig ausgebildet. Dadurch wird ein kürzeres und steiferes Säulen- bzw. Führungssystem erreicht. Aufgrund der Kürzung der Führungsholme ist bei gleicher Kraft eine geringere Dehnung erforderlich, so dass sich die Druckaufbau- und -abbauzeiten verringern. Die durch die Reduzierung der Bauteile erreichte Steifigkeit erhöht die Präzision der Führung des beweglichen Formträgers, so dass eine höhere Präzision auch bei der Herstellung der Spritzteile erreicht wird. Gleichzeitig ergibt sich durch die Anordnung des Abstützelements am dem stationären Formträger näher gelegenen Ende des Zylinders eine Abstützung des Zylindersystems zur Maschinenbasis im optimierten Schwerpunkt.

Weitere Vorteile ergeben sich aus den Unteransprüchen.

Im folgenden wird die Erfindung anhand eines Ausführungsbeispiels näher erläutert. Es zeigen:
- Fig. 1: einen Ausschnitt aus einer Spritzgießmaschine mit einer auf einem Maschinenfuß angeordneten Formschließeinheit mit zugehöriger Spritzgießeinheit in Seitenansicht,
- Fig. 2: einen vergrößerten Längsschnitt durch die Schließeinrichtung gemäß Fig. 1 bei geöffneter Spritzgießform,
- Fig. 3: einen Schnitt nach Linie 3-3 von Fig. 2,
- Fig. 4: eine dreidimensionale Darstellung einer Schließeinrichtung in einem weiteren Ausführungsbeispiel,
- Fig. 5: eine stimseitige Ansicht der Schließeinrichtung gemäß Fig. 4,
- Fig. 6: die Ansicht gemäß Fig. 5 mit nur einem Verteilerblock.

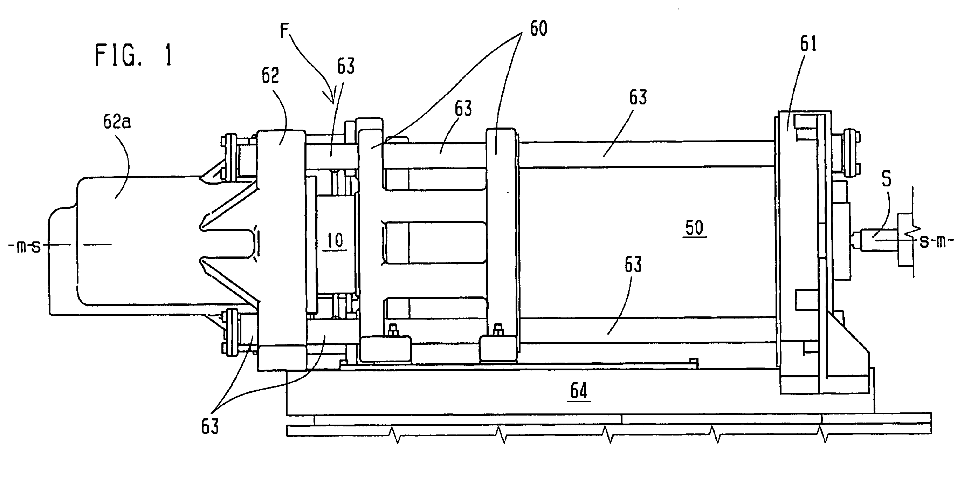

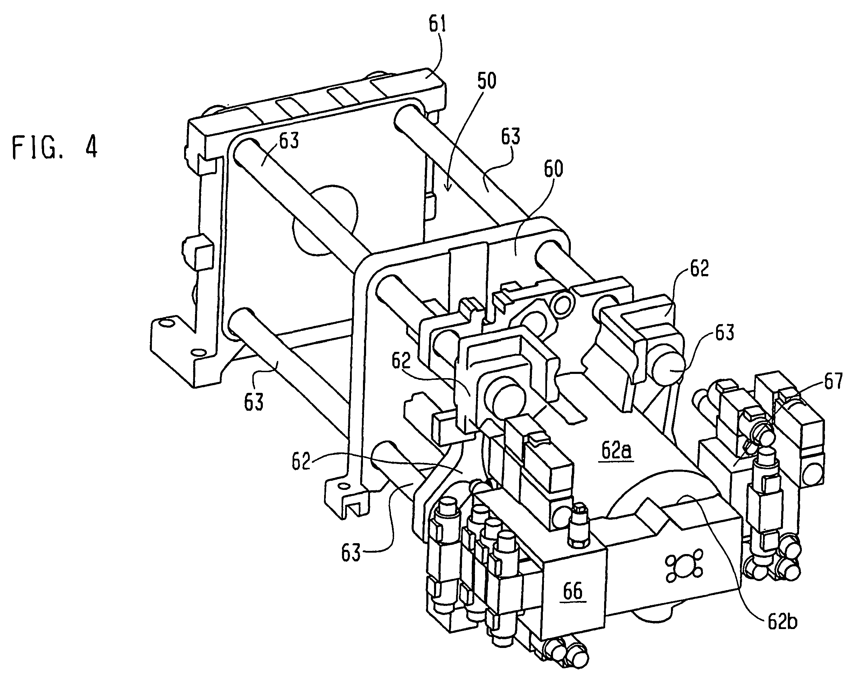

Figur 1 zeigt die Schließeinrichtung an einer Formschließeinheit F einer Kunststoff-Spritzgießmaschine zur Verarbeitung von Kunststoffen und anderen plastifizierbaren Massen wie z.B. pulvrigen Massen oder keramischen Massen. Die Formschließeinheit F ist auf einem Maschinenfuß 64 abgestützt und umfasst einen stationären Formträger 61, einen beweglichen Formträger 60 sowie ein Abstützelement 62. Am Abstützelement 62 ist die Schließeinrichtung abgestützt, von der in Figur 1 der außen liegende Ausgleichszylinder 62a und der diesem Ausgleichszylinder als Kolben dienende Druckzylinder 11 zu sehen ist. Bei Betätigung der Druckzylindereinheit 10 wird der bewegliche Formträger 60 bewegt, wobei er entlang den Führungsholmen oder Führungssäulen 63 geführt ist. Im Formspannraum 50 ist eine zeichnerisch nicht dargestellte Spritzgießform aufnehmbar, die infolge der Bewegung der Schließeinrichtung zyklisch geöffnet und geschlossen wird. Im geschlossenen Zustand wird über eine Öffnung des stationären Formträgers 61 von der Spritzgießeinheit S plastifiziertes Material in den Formhohlraum der Spritzgießform M eingespritzt. Insofem zeigt Figur 1 grundsätzlich den üblichen Aufbau einer Formschließeinheit an einer Kunststoff-Spritzgießmaschine. Allerdings sind auch andere Aufbauten der Formschließeinheit möglich. So kann z.B. bei einer Ausgestaltung nach den Fig. 4 bis 6 auch das Abstützelement 62 über eine stationäre Lagerung am Maschinenfuß 64 oder einem Teil davon gelagert sein, so dass der Ausgleichszylinder 62a ebenfalls stationär ist. Der "stationäre Formträger 61 bewegt sich insofern beim Formschluss aufgrund der Holmlängung in Schließrichtung, bildet aber trotzdem einen Referenzpunkt für die Spritzgießeinheit.

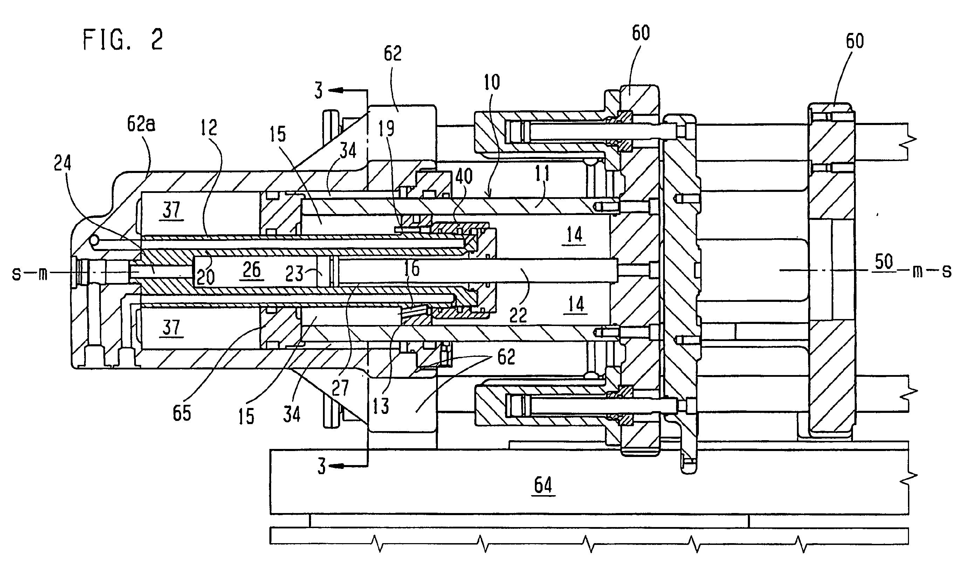

Gemäß Fig. 1 und 2 wird das Abstützelement 62 für die Druckzylindereinheit 10 auf der vom stationären Formträger 61 abgewandten Seite durch wenigstens einen mit dem Abstützelement 62 verbundenen und damit stationären Zylinder der Formschließeinheit F überragt. Das Abstützelement ist mit der Formschließeinheit einstückig ausgebildet, im Ausführungsbeispiel in Form eine Gussteils.

Deutlich ist zu erkennen, dass die Führungsholme 63 in Höhe des Abstützelements 62 enden. Dadurch wird ein kürzeres und steiferes Säulen- bzw. Führungssystem erreicht. Aufgrund der Kürzung der Führungsholme 63 ist zum Aufbau der gleichen Kraft eine geringere Gesamtdehnung erforderlich, so dass sich die Druckaufbau- und -abbauzeiten verringern. Die durch die Reduzierung der Bauteile erreichte Steifigkeit erhöht die Präzision der Führung des beweglichen Formträgers und damit auch die Präzision bei der Herstellung der Spritzteile. Gleichzeitig ergibt sich durch die Anordnung des Abstützelements 62 am dem stationären Formträger 61 näher gelegenen Ende des Zylinders eine Abstützung des Zylindersystems zur Maschinenbasis im optimierten Schwerpunkt.

Der überragende und außen liegende Zylinder ist der Ausgleichszylinder 62a, der mit dem Abstützelement zusammen vorzugsweise als einstückiges Gussteil ausgebildet ist. Damit ist die Schließeinrichtung so aufgebaut, dass die Zylinder der Schließeinrichtung ineinander geschachtelt sind. Alle Zylinder sind konzentrisch zu einer Mittelachse m-m angeordnet, so dass eine Krafteinleitung konzentrisch zu dieser Mittelachse erfolgt. Damit kommt es nicht mehr zu einer asymmetrischen Krafteinleitung innerhalb der Schließeinrichtung, so dass eine noch höhere Präzision der Spritzgießmaschine gewährleistet ist. Gleichzeitig ist das zum Aufbau des Zuhaltedrucks erforderliche Volumen an Hydraulikmedium leicht verfügbar, da es bei Bewegung aus Ausgleichszylinderraum 34 und Niederdruckraum 15 durch den Druckkolben 13 hindurch in den Hochdruckraum 14 verdrängt wird. Damit sind schnelle Druckaufbauzeiten möglich.

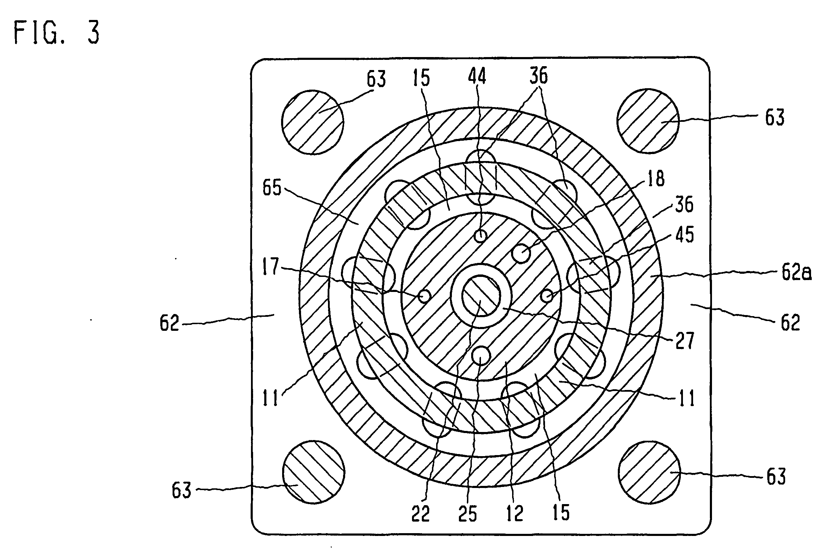

Gemäß Fig. 2, 3 besitzt die Schließeinrichtung wenigstens eine hydraulische Druckzylindereinheit 10 zum Aufbau des Zuhaltedrucks bei geschlossener Spritzgießform. Im Ausführungsbeispiel ist lediglich eine einzige Druckzylindereinheit 10 gezeigt, deren Mittelachse m-m zugleich die Mittelachse bzw. Symmetrieachse s-s der Formschließeinheit ist. Dies hat den Vorteil einer symmetrischen Krafteinleitung auf den beweglichen Formträger 60 und damit auf die Spritzgießform M. Grundsätzlich können auch mehrere entsprechend aufgebaute Schließeinrichtungen parallel zueinander angeordnet sein, sofern ein entsprechend gleichmäßiger Druckaufbau in den einzelnen Druckzylindereinheiten gewährleistet wird. Durch diese Ausgestaltung ergibt sich ein platzsparender Aufbau, da in den jeweiligen Kolben von Ausgleichszylinder und Druckzylindereinheit die entsprechenden Überströmkanäle unmittelbar vorgesehen sind, so dass auf zusätzliche hydraulische Leitungen verzichtet werden kann, die sich negativ auf Druckaufbauzeiten und Wirkungsgrad auswirken würden.

In der Druckzylindereinheit 10 ist ein Druckkolben 13 vorgesehen, dessen Kolbenstange 12 entlang der Mittelachse m-m der Druckzylindereinheit 10 angeordnet ist. Gemäß Figur 2 trennt dieser Druckkolben 13 den Hochdruckraum 14 der Druckzylindereinheit vom Niederdruckraum 15. Über die Druckzylindereinheit 10 wird vor allem nach Schließen der Form der Zuhaltedruck im Hochdruckraum 14 innerhalb des Zylinders 11 aufgebaut. Das Öffnen und Schließen der Spritzgießform - wobei im wesentlichen die Massen der Schließeinrichtung bewegt werden müssen, so dass hierfür ein geringer Druck ausreicht - erfolgt über einen der Druckzylindereinheit 10 zugeordneten, hydraulischen Antriebszylinder 20. Der Antriebszylinder 20 liegt konzentrisch in der Druckzylindereinheit 10, und zur Mittelachse m-m, wobei sein eigentlicher Zylinder durch die Kolbenstange 12 der Druckzylindereinheit 10 gebildet ist. Ist nur eine einzige Druckzylindereinheit vorhanden, ergibt sich eine optimale symmetrische Krafteinleitung, da aber andererseits die Zylinder sich voll umfänglich umschließen, können die notwendigen Volumina platzsparend zur Verfügung gestellt werden.

Zum Schließen der Form wird über eine Hydraulikleitung in Form der Bohrung 24 Hydraulikmedium dem Zylinderraum 26 zugeführt, zum Öffnen der Form wird über eine in der Kolbenstange 12 der Druckzylindereinheit angeordnete Hydraulikleitung in Form der Bohrung 25 (Fig. 3) Hydraulikmedium dem Zylinderraum 27 zugeführt. Um das durch den Druckkolben 13 beim Öffnen der Spritzgießform M aus dem Hochdruckraum 14 verdrängte Hydraulikmedium nicht bei jedem Spritzzyklus in den Tank zu pumpen und anschließend von dort wieder in den Hochdruckraum zu pumpen, ist der Ausgleichszylinder 62a zur Aufnahme bzw. Abgabe von aus der Druckzylindereinheit 10 kommenden bzw. an diese abzugebenden Hydraulikmedium vorgesehen. Der Ausgleichszylinderraum 34 steht mit dem Niederdruckraum 15 der Druckzylindereinheit 10 in offener Verbindung.

Gemäß Fig. 3 in Verbindung mit Fig. 2 ist der Ausgleichszylinder 62a ebenfalls konzentrisch zur Mittelachse m-m angeordnet. Damit sind sämtliche Zylinder ineinander geschachtelt und konzentrisch zur Mittelachse m-m angeordnet. Dies führt zu einem symmetrischen Aufbau, so dass nicht einmal das eigentlich nur passive Volumen des Ausgleichszylinders einen negativen Einfluss auf die Präzision der Spritzgießmaschine haben kann.

Diese Anordnung führt dazu, dass die eigentliche Kolbenstange des Ausgleichszylinders 62a durch den Zylinder 11 der Druckzylindereinheit 10 gebildet ist, also in ähnlicher Weise eine Doppelfunktion erfüllt wie die Kolbenstange 12 der Druckzylindereinheit 10 im Hinblick auf den Antriebszylinder 20. Im Ausführungsbeispiel sind der Druckkolben 13. und die Kolbenstange 12 mit dem stationären Ausgleichszylinder 62a verbunden, der mit dem Abstützelement 62 einstückig ist. Der Zylinder 11 der Druckzylindereinheit 10 und damit der Kolben des Ausgleichszylinders sowie die Kolbenstange 22 mit dem Kolben 23 des Antriebszylinders hingegen sind mit dem beweglichen Formträger 60 verbunden, was zu einer entsprechenden Reduzierung der zu bewegenden Massen führt.

Zwischen den einzelnen Zylinderräumen wird das Hydraulikmedium über Überströmkanäle befördert. So befindet sich im Kolben 65 des Ausgleichszylinders 62a ein Überströmkanal 36 (Fig. 3), um die offene Verbindung zwischen dem Ausgleichszylinderraum 34 und dem Niederdruckraum 15 der Druckzylindereinheit 10 herzustellen. Dieser Überströmkanal ist durch verschiedene Bohrungen im Kolben 65 gebildet, so dass ein schnelles und strömungstechnisch problemloses Überführen des Hydraulikmediums aus dem Ausgleichszylinderraum 34 in den Niederdruckraum 15 erfolgen kann. Im Druckkolben 13 der Druckzylindereinheit 10 ist ein weiterer Überströmkanal 16 vorhanden, der jedoch über ein Ventil absperrbar ist, um bedarfsweise Niederdruckraum 15 und Hochdruckraum 14 zu trennen. Als hydraulisch betätigbares Ventil wird dabei ein an der Kolbenstange 12 bzw. im Druckkolben 13 der Druckzylindereinheit 10 begrenzt beweglicher Ringkolben 40 vorgesehen. Ist der Überströmkanal 16 geöffnet, so wird beim Schließen der Form Hydraulikmedium zunächst über die Bohrung 24 in den Zylinderraum 26 gefördert. Infolge der dadurch veranlassten Bewegung wird zunächst Hydraulikmedium aus dem Hydraulikraum 27 des Antriebszylinders 20 über eine Hydraulikleitung in Form der Bohrung 25 verdrängt. Da mit dieser Bewegung aber auch der Zylinder 11 in Fig. 2 nach rechts bewegt wird, wird Hydraulikmedium aus dem Ausgleichszylinderraum 34 über den Überströmkanal 36 in den Niederdruckraum 15 und von dort über den Überströmkanal 16 in den Hochdruckraum 14 verdrängt. Da der Kolben 65 des Ausgleichszylinders 62a nur einseitig mit Hydraulikmedium beaufschlagbar ist, befindet sich im Raum 37 atmosphärischer Druck.

Die Volumina des Ausgleichszylinderraums 34 und des Niederdruckraumes 15 gemäß Fig. 2 entsprechen etwa dem Volumen des Hochdruckraums 14 in geschlossener Stellung der Spritzgießform. Es wird jedoch vorzugsweise gewährleistet, dass bei jedem Zyklus zumindest ein geringer Ölaustausch stattfindet, um eine Reinigung und Kühlung des Hydraulikmediums sicher zu stellen.

Ist die Spritzgießform geschlossen, muss der Zuhaltedruck im Hochdruckraum 14 aufgebaut werden. Hierzu wird zunächst der als Ventil vorgesehene Ringkolben 40 über eine Hydraulikleitung geschlossen. Anschließend wird über eine Hydraulikleitung in Form der Bohrung 17 der Zuhaltedruck aufgebaut. Ist der Spritzgießvorgang beendet, wird zunächst Druck wieder über die Bohrung 17 abgebaut. Dann wird der Ringkolben 40 über eine weitere Hydraulikleitung rückgestellt, so dass der Druck im Hochdruckraum 14 abgebaut wird. Grundsätzlich kann nun die Spritzgießform über Zufuhr von Hydraulikmedium über die Bohrung 25 zum Hydraulikraum 27 wieder geöffnet werden. Genügt diese Kraft nicht zum Öffnen der Form, kann zusätzlich ein Hochdrucköffnen bei geschlossenem Ringkolben 40 mit Niederdruckraum 15 und Ausgleichszylinderraum 34 erfolgen.

Um Beschädigungen zu vermeiden, die beim Betrieb der Schließeinrichtung ohne oder bei zu kleiner Sprifizgießform entstehen könnten, ist am Druckkolben 13 ein Sicherungsstift 19 vorgesehen; er stellt ein zusätzliches Sicherheitssystem dar. Fahren Druckkolben 13 und Kolben 65 des Ausgleichszylinders 62a zu dicht aneinander heran, wird der Sicherungsstift betätigt. Infolge dessen wird die Verbindung zwischen Niederdruckraum 15 und Hochdruckraum 14 geöffnet und ein sofortiger Druckabbau tritt ein.

Zur weiteren Optimierung können das Abstützelement 62 oder der mit dem Abstützelement einstückige Ausgleichszylinder 62a nach den Fig. 4 bis 6 Anschlusselemente 62b zum unmittelbaren Anschluss wenigstens eines hydraulischen Verteilerblocks 66,67 aufweisen. Dies bietet sich insbesondere bei der Herstellung des Ausgleichszylinders als Gussteil an, da die entsprechenden Anschlussflächen gleichzeitig mit der Herstellung des Gussteils hergestellt werden können. Es ergibt sich damit eine sehr kompakte Einheit mit kürzesten Leitungen nach den Schaltventilen, was zu höchster Schaltgenauigkeit und damit auch zur Präzision und Geschwindigkeit weiter beiträgt. Auf bewegliche Leitungen kann weitest gehend verzichtet werden. Leckagemöglichkeiten werden reduziert. Gleichzeitig ergeben sich vormontierbare und beim Hersteller testbare Einheiten.

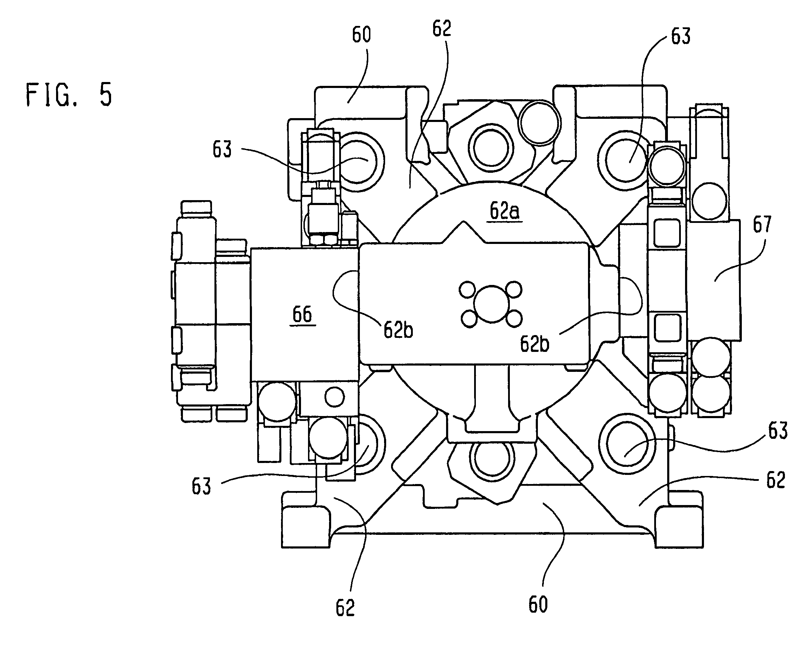

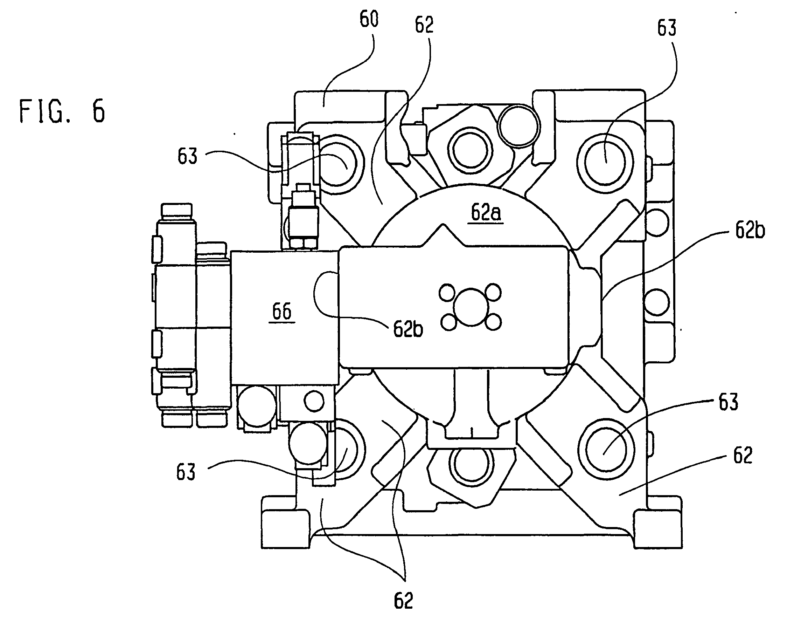

Gemäß Fig. 4,5 können mehrere Verteilerblöcke 66,67 vorgesehen sein, wobei der Verteilerblock 66 z.B. für die Standardfunktionen bestimmt ist, während der Verteilerblock 67 für weitere Funktionen wie Ausstoßer oder Kemzug verwendet werden kann. In Fig. 6 ist insofern der Verteilerblock 67 nicht vorgesehen.

### Liste der Bezugszeichen

- 10: Druckzylindereinheit
- 11: Zylinder
- 12: Kolbenstange
- 13: Druckkolben
- 14: Hochdruckraum
- 15: Niederdruckraum
- 16: Überströmkanal
- 17,18: Bohrung
- 19: Sicherungsstift
- 20: Antriebszylinder
- 22: Kolbenstange
- 23: Kolben
- 24,25: Bohrung
- 26,27: Zylinderraum
- 34: Ausgleichszylinderraum
- 36: weiterer Überströmkanal
- 37: Raum
- 40: Ringkolben
- 50: Formspannraum
- 60: beweglicher Formträger
- 61: stationärer Formträger
- 62: Abstützelement
- 62a: Ausgleichszylinder
- 62b: Anschlusselemente
- 63: Führungsholm
- 64: Maschinenfuß
- 65: Kolben von 62a
- 66,67: hydraulische Verteilerblöcke

- F: Formschließeinheit
- S: Spritzgießeinheit
- m-m: Mittelachse
- s-s: Symmetrieachse

## Patentansprüche

1. Schließeinrichtung an der Formschließeinheit (F) einer Kunststoff-Spritzgießmaschine zur Verarbeitung von Kunststoffen und anderen plastifizierbaren Massen mit
- wenigstens einer hydraulischen Druckzylindereinheit (10) zum Aufbau eines Zuhaltedrucks auf eine Spritzgießform (M), die in einem Formspannraum (50) aufgenommen ist,
- einem in der Druckzylindereinheit (10) angeordneten Druckkolben (13), dessen Kolbenstange (12) entlang einer Mittelachse (m-m) der Druckzylindereinheit (10) angeordnet ist und der den Hochdruckraum (14) der Druckzylindereinheit von deren Niederdruckraum (15) trennt,
- einem der Druckzylindereinheit zugeordneten, hydraulischen Antriebszylinder (20) zum Schließen der Spritzgießform (M), der konzentrisch zur Mittelachse (m-m) angeordnet ist und dessen eigentlicher Zylinder durch den Druckkolben (13) der Druckzylindereinheit (10) gebildet ist,
- einem Abstützelement (62) für die Druckzylindereinheit, das auf der vom Formspannraum (50) abgewandten Seite durch wenigstens einen mit dem Abstützelement (62) fest verbundenen Zylinder (62a) der Fonnschließeinheit überragt wird,
**dadurch gekennzeichnet, dass** das Abstützelement (62) mit dem mit dem Abstützelement verbundenen Zylinder (62a) der Formschließeinheit einstückig ist.

2. Schließeinrichtung nach Anspruch 1, **dadurch gekennzeichnet, dass** das Abstützelement über eine stationäre Lagerung am Maschinenfuß (64) oder einem Teil davon gelagert ist und dass der Zylinder (62a) ebenfalls stationär ist.

3. Schließeinrichtung nach Anspruch 1 oder 2, **dadurch gekennzeichnet, dass** der mit dem Abstützelement einstückige Zylinder ein der Druckzylindereinheit (10) zugeordneter, hydraulischer Ausgleichszylinder (62a) zur Aufnahme bzw. Abgabe von aus der Druckzylindereinheit (10) kommenden bzw. an diese abzugebenden Hydraulikmedium ist, dessen Ausgleichszylinderraum (34) mit dem Niederdruckraum (15) der Druckzylindereinheit (10) in offener Verbindung steht und der ebenfalls konzentrisch zur Mittelachse (m-m) angeordnet ist.

4. Schließeinrichtung nach einem der vorhergehenden Ansprüche, **dadurch gekennzeichnet, dass** die eigentliche Kolbenstange des Ausgleichszylinders (62a) durch den Zylinder (11) der Druckzylindereinheit (10) gebildet ist.

5. Schließeinrichtung nach einem der vorhergehenden Ansprüche, **dadurch gekennzeichnet, dass** Druckkolben (13) und Kolbenstange (12) der Druckzylindereinheit (10) stationär und mit dem stationären Zylinder verbunden sind und dass die Kolbenstange des Ausgleichszylinders (62a) und damit der Zylinder (11) der Druckzylindereinheit (10) mit dem beweglichen Formträger (60) zur gemeinsamen Bewegung verbunden ist.

6. Schließeinrichtung nach einem der vorhergehenden Ansprüche, **dadurch gekennzeichnet, dass** der Kolben (65) des Ausgleichszylinders (62a) einen Überströmkanal (36) für die offene Verbindung des Ausgleichszylinderraums (34) mit dem Niederdruckraum (15) der Druckzylindereinheit (10) aufweist.

7. Schließeinrichtung nach einem der vorhergehenden Ansprüche, **dadurch gekennzeichnet, dass** der Ausgleichszylinder (62a) die Druckzylindereinheit (10) ummantelt.

8. Schließeinrichtung nach einem der vorhergehenden Ansprüche, **dadurch gekennzeichnet, dass** im Druckkolben (13) der Druckzylindereinheit (10) ein über ein vorzugsweise hydraulisch betätigbares Ventil absperrbarer, weiterer Überströmkanal (16) zwischen Niederdruckraum (15) und Hochdruckraum (14) vorgesehen ist, das vorzugsweise durch einen an der Kolbenstange (12) bzw. im Druckkolben (13) der Druckzylindereinheit (10) begrenzt beweglichen Ringkolben (40) gebildet ist.

9. Schließeinrichtung nach einem der vorhergehenden Ansprüche, **dadurch gekennzeichnet, dass** der Kolben (65) des Ausgleichszylinders (62a) nur einseitig mit Hydraulikmedium beaufschlagbar ist.

10. Schließeinrichtung nach einem der vorhergehenden Ansprüche, **dadurch gekennzeichnet, dass** Niederdruckraum (15) und Ausgleichszylinderraum (34) bedarfsweise über eine Hydraulikleitung zusätzlich mit Druck beaufschlagbar sind.

11. Schließeinrichtung nach einem der vorhergehenden Ansprüche, **dadurch gekennzeichnet, dass** die Mittelachse (m-m) der einzigen Dnrckzylindereinheit (10) zugleich die Mittelachse bzw. Symmetrieachse (s-s) der Formschließeinheit ist.

12. Schließeinrichtung nach einem der vorhergehenden Ansprüche, **dadurch gekennzeichnet, dass** am Druckkolben (13) ein Sicherungsstift (19) vorgesehen ist, der bei Betätigung durch den Kolben (65) des Ausgleichszylinders (62a) die Verbindung zwischen Niederdruckraum (15) und Hochdruckraum (14) öffnet.

13. Schließeinrichtung nach einem der vorhergehenden Ansprüche, **dadurch gekennzeichnet, dass** das Abstützelement (62) oder der mit dem Abstützelement einstückige Zylinder (62a) Anschlusselemente (62b) zum unmittelbaren Anschluss wenigstens eines hydraulischen Verteilerblocks aufweist.

## Claims

1. Closing device on the mould closing unit (F) of a plastics material injection moulding machine for processing plastics materials and other plasticisable substances having
- at least one hydraulic pressure cylinder unit (10) for building up a closing pressure onto an injection mould (M), which is accommodated in a mould clamping area (50),
- a pressure piston (13) disposed in the pressure cylinder unit (10), the piston rod (12) of which pressure piston (13) is disposed along a central axis (m-m) of the pressure cylinder unit (10), said pressure piston (13) separating the high pressure chamber (14) of the pressure cylinder unit from its low pressure chamber (15),
- a hydraulic drive cylinder (20) associated with the pressure cylinder unit for closing the injection mould (M) which drive cylinder (20) is disposed concentrically relative to the central axis (m-m) and the actual cylinder of which drive cylinder (20) is formed by the pressure piston (13) of the pressure cylinder unit (10),
- a supporting element (62) for the pressure cylinder unit, which supporting element (62), on the side remote from the mould clamping area (50), is projected over by at least one cylinder (62a) of the mould closing unit, which cylinder (62a) is securedly connected to the supporting element (62),
**characterised in that** the supporting element (62) that is connected to the cylinder (62a) of the mould closing unit is unitary with the cylinder (62a).

2. Closing device according to claim 1, **characterised in that** the supporting element is mounted via a stationary bearing arrangement on the machine base (64) or on a part thereof, and **in that** the cylinder (62a) is also stationary.

3. Closing device according to claim 1 or 2, **characterised in that** the cylinder, which is produced in one piece with the supporting element, is a hydraulic compensating cylinder (62a) associated with the pressure cylinder unit (10) for accommodating hydraulic media coming out of the pressure cylinder unit (10) or respectively discharging hydraulic media to be deposited in this pressure cylinder unit (10), the compensating cylinder chamber (34) of said compensating cylinder (62a) is in open connection with the low pressure chamber (15) of the pressure cylinder unit (10) and said compensating cylinder is also disposed concentrically relative to the central axis (m-m).

4. Closing device according to one of the preceding claims, **characterised in that** the actual piston rod of the compensating cylinder (62a) is formed by the cylinder (11) of the pressure cylinder unit (10).

5. Closing device according to one of the preceding claims, **characterised in that** pressure piston (13) and piston rod (12) of the pressure cylinder unit (10) are stationary and are connected to the stationary cylinder, and **in that** the piston rod of the compensating cylinder (62a) and consequently the cylinder (11) of the pressure cylinder unit (10) is connected to the movable mould carrier (60) for common movement.

6. Closing device according to one of the preceding claims, **characterised in that** the piston (65) of the compensating cylinder (62a) has an overflow channel (36) for the open connection between the compensating cylinder chamber (34) and the low pressure chamber (15) of the pressure cylinder unit (10).

7. Closing device according to one of the preceding claims, **characterised in that** the compensating cylinder (62a) surrounds the pressure cylinder unit (10).

8. Closing device according to one of the preceding claims, **characterised in that** in the pressure piston (13) of the pressure cylinder unit (10) there is provided a further overflow channel (16) between low pressure chamber (15) and high pressure chamber (14), it being possible to shut-off said overflow channel (16) by means of a preferably hydraulically actuatable valve, said valve preferably being formed by an annular piston (40), which is displaceable in a limited manner on the piston rod (12) or respectively in the pressure piston (13) of the pressure cylinder unit (10).

9. Closing device according to one of the preceding claims, **characterised in that** the piston (65) of the compensating cylinder (62a) can only be acted upon with hydraulic medium at one end.

10. Closing device according to one of the preceding claims, **characterised in that** low pressure chamber (15) and compensating cylinder chamber (34), where necessary, can be acted upon additionally with pressure via a hydraulic line.

11. Closing device according to one of the preceding claims, **characterised in that** the central axis (m-m) of the single pressure cylinder unit (10) is at the same time the central axis or respectively the axis of symmetry (s-s) of the mould closing unit.

12. Closing device according to one of the preceding claims, **characterised in that** on the pressure piston (13) there is provided a locking pin (19), which, when actuated by the piston (65) of the compensating cylinder (62a), opens the connection between low pressure chamber (15) and high pressure chamber (14).

13. Closing device according to one of the preceding claims, **characterised in that** the supporting element (62) or the cylinder (62a), which is produced in one piece with the supporting element, has connection elements (62b) for the connection of at least one hydraulic distribution block.

## Revendications

1. Dispositif de fermeture monté sur l'unité de fermeture de moule (F) d'une machine de moulage par injection de matière plastique pour le traitement de matières plastiques et d'autres masses plastifiables, comportant
- au moins une unité cylindre de pression hydraulique (10) pour établir une pression de maintien sur un moule de moulage par injection (M) qui est logé dans un espace de serrage de moule (50),
- un piston de pression (13) disposé dans l'unité cylindre de pression (10), dont la tige de piston (12) est disposée le long d'un axe central (m-m) de l'unité cylindre de pression (10) et qui sépare l'espace à haute pression (14) de l'unité cylindre de pression de l'espace à basse pression (15) de celle-ci,
- un cylindre de commande hydraulique (20) associé à l'unité cylindre de pression, pour fermer le moule de moulage par injection (M), disposé de manière concentrique par rapport à l'axe central (m-m) et dont le cylindre à proprement parler est constitué par le piston de pression (13) de l'unité cylindre de pression (10),
- un élément d'appui (62) pour l'unité cylindre de pression, lequel est dépassé, du côté opposé à l'espace de serrage de moule (50), par au moins un cylindre (62a) de l'unité de fermeture de moule solidaire de l'élément d'appui (62),
**caractérisé en ce que** l'élément d'appui (62) est d'une seule pièce avec le cylindre (62a) de l'unité de fermeture de moule relié à l'élément d'appui.

2. Dispositif de fermeture selon la revendication 1, **caractérisé en ce que** l'élément d'appui est logé par l'intermédiaire d'un logement fixe sur le pied de machine (64) ou une partie de celui-ci et **en ce que** le cylindre (62a) est également fixe.

3. Dispositif de fermeture selon la revendication 1 ou 2, **caractérisé en ce que** le cylindre réalisé d'une seule pièce avec l'élément d'appui est un cylindre compensateur hydraulique (62a) associé à l'unité cylindre de pression (10), servant à recevoir respectivement délivrer du fluide hydraulique venant de l'unité cylindre de pression (10) respectivement à délivrer à celle-ci, dont l'espace de cylindre compensateur (34) communique ouvertement avec l'espace à basse pression (15) de l'unité cylindre de pression (10) et qui est également disposé de manière concentrique par rapport à l'axe central (m-m).

4. Dispositif de fermeture selon l'une des revendications précédentes, **caractérisé en ce que** la tige de piston à proprement parler du cylindre compensateur (62a) est constituée par le cylindre (11) de l'unité cylindre de pression (10).

5. Dispositif de fermeture selon l'une des revendications précédentes, **caractérisé en ce que** le piston de pression (13) et la tige de piston (12) de l'unité cylindre de pression (10) sont fixes et reliés au cylindre fixe et **en ce que** la tige de piston du cylindre compensateur (62a) et donc le cylindre (11) de l'unité cylindre de pression (10) est relié au porte-moule mobile (60) aux fins d'un mouvement commun.

6. Dispositif de fermeture selon l'une des revendications précédentes, **caractérisé en ce que** le piston (65) du cylindre compensateur (62a) comporte un canal de trop-plein (36) pour la communication ouverte de l'espace (34) du cylindre compensateur avec l'espace à haute pression (15) de l'unité cylindre de pression (10).

7. Dispositif de fermeture selon l'une des revendications précédentes, **caractérisé en ce que** le cylindre compensateur (62a) enveloppe l'unité cylindre de pression (10).

8. Dispositif de fermeture selon l'une des revendications précédentes, **caractérisé en ce qu'**est prévu, dans le piston de pression (13) de l'unité cylindre de pression (10), un autre canal de trop-plein (16) entre l'espace à basse pression (15) et l'espace à haute pression (14), lequel peut être fermé par l'inter médiaire d'une soupape actionnable de préférence hydrauliquement, laquelle soupape est constituée de préférence par un piston annulaire (40) à mobilité limitée sur la tige de piston (12) respectivement dans le piston de pression (13) de l'unité cylindre de pression (10).

9. Dispositif de fermeture selon l'une des revendications précédentes, **caractérisé en ce que** le piston (65) du cylindre compensateur (62a) ne peut être alimenté en fluide hydraulique que d'un côté.

10. Dispositif de fermeture selon l'une des revendications précédentes, **caractérisé en ce que** l'espace à basse pression (15) et l'espace (34) du cylindre compensateur peuvent être additionnellement alimentés en pression par l'intermédiaire d'une conduite hydraulique selon les besoins.

11. Dispositif de fermeture selon l'une des revendications précédentes, **caractérisé en ce que** l'axe central (m-m) de l'unique unité cylindre de pression (10) est en même temps l'axe central ou de symétrie (s-s) de l'unité de fermeture de moule.

12. Dispositif de fermeture selon l'une des revendications précédentes, **caractérisé en ce qu'**est prévue, sur le piston de pression (13), une goupille de sécurité (19) qui établit la communication entre l'espace à basse pression (15) et l'espace à haute pression (14) lors de l'actionnement par le piston (65) du cylindre compensateur (62a).

13. Dispositif de fermeture selon l'une des revendications précédentes, **caractérisé en ce que** l'élément d'appui (62) ou le cylindre compensateur (62a) réalisé d'une seule pièce avec l'élément d'appui comporte des éléments de raccordement (62b) pour raccordement direct d'au moins un bloc de distribution hydraulique.
